# EUROPEAN PATENT APPLICATION

(11) **EP 0 585 048 A1**
(43) Date of publication of application: **02.03.1994**
(21) Application number: 93306531.0
(22) Date of filing: 18.08.1993
(51) Int. Cl.: G01K 13/02

(54) **Temperature sensor**

(30) Priority: 21.08.1992 GB 9217875
(71) Applicant: CARADON MIRA LIMITED, Cheltenham Gloucestershire GL52 5EP (GB)
(72) Inventor: Lorton, Robert, Cheltenham, Gloucestershire GL52 6RQ (GB)
(74) Representative: Knowles, Audrey Elizabeth

(57) **Abstract**

A water temperature sensor comprises a temperature responsive element 5 potted in a filler compound 6 contained in a tubular body 7 arranged to extend across the water flow path. The body 7 has a substantially higher thermal conductivity than the filler compound 6 such that temperature variations across the flow path are averaged out.

## Description

This invention relates to temperature sensors for fluids such as water. The invention has particular application to ablutionary appliances and installations such as showers.

It is desirable when showering to maintain constant a selected water temperature and to prevent any sudden increase in water temperature that may result in the user being scalded.

It is known to provide water having a selected temperature for showering by mixing hot and cold water and to maintain the selected temperature constant by varying the relative proportions of hot and cold water to compensate for changes in pressure and/or temperature of one or both supplies which would cause the selected water temperature to change.

Usually, a thermostat is arranged to monitor the mixed water temperature and a proportioning valve is responsive to change in the selected water temperature detected by the thermostat to adjust the relative proportions of hot and cold water.

Previously, it has been necessary to ensure that the mixed water temperature detected by the thermostat is the "true" water temperature, i.e. the temperature obtained after the hot and cold water has been fully mixed and various constructions have been proposed to effect complete mixing of the hot and cold water upstream of the thermostat.

The known constructions are often complex which adds to manufacturing costs and introduce a time delay in the response to changing water temperature whilst mixing takes place.

The present invention has been devised from a consideration of the disadvantages and problems of known temperature sensors and has for its object to provide an improved temperature sensor for fluids, especially water.

According to the present invention there is provided a temperature sensor for fluids comprising a temperature responsive element embedded in a filler compound contained in a housing having a higher thermal conductivity than the filler compound and adapted, in use, to straddle the flow path of a fluid the temperature of which is to be monitored.

The main advantage of the invented temperature sensor is that variations in the water temperature across the flow path, for example due to incomplete mixing of hot and cold water, are averaged out by the differential thermal conductivities of the housing and filler compound. As a result, the sensor element provides an output which is proportional to the "true" water temperature.

Preferably, the sensor is mounted in a fluid passageway, for example a duct, defining the flow path and the housing is thermally insulated from the passageway on the upstream and downstream sides of the sensor. In this way, the output of the sensor is not affected by thermal conductivity along the passageway.

In a preferred construction, the housing extends transverse to the direction of fluid flow in an annular ring member adapted for mounting in the fluid passageway with a thermal break at each end.

Advantageously, the temperature responsive element is centrally positioned in the flow path, for example on the central longitudinal axis of the fluid passageway, and is preferably adapted to provide an electrical output representative of the water temperature. For example, the temperature responsive element may comprise a diode, thermocouple or the like whose resistance changes with temperature.

The output may be used to control a valve means to vary the proportions of hot and cold water to maintain a selected water temperature constant. In such arrangement the sensor can be positioned close to the actual point of mixing of the hot and cold water, for example at a T-junction, so that a fast response to change in water temperature is obtained.

Preferably, the housing is made of metal or alloy, for example copper or brass, having a thermal conductivity substantially greater than the filler compound. For example, the ratio of the thermal conductivities of the housing and filler may be of the order of approximately 100:1 or greater.

Suitable filler compounds include epoxy resins which may be modified to control the thermal conductivity. Thus, the thermal conductivity of the basic filler compound may be increased by the addition of particles of metal, metal oxide or the like. In this way, the response of the sensor can be controlled to suit the requirements for a given application.

Other features, benefits and advantages of the invention will be apparent from the following description of exemplary embodiments with reference to the accompanying drawing, wherein:-
FIGURE 1 shows in transverse section a first embodiment of a temperature sensor according to the invention mounted in a fluid passageway;
FIGURE 2 shows in transverse section a second embodiment of a temperature sensor according to the invention mounted in a fluid passageway;
FIGURE 3 is an end view of a third embodiment of a temperature sensor according to the invention;
FIGURE 4 is a section on the line 4-4 of Figure 3;
FIGURE 5 shows in transverse section a bath/shower mixer incorporating the temperature sensor shown in Figures 3 and 4;
FIGURE 6 shows a graph of the temperature trace for the sensor shown in Figure 3; and
FIGURE 7 shows a graph of the temperature trace for a thermocouple for comparison with Figure 6.

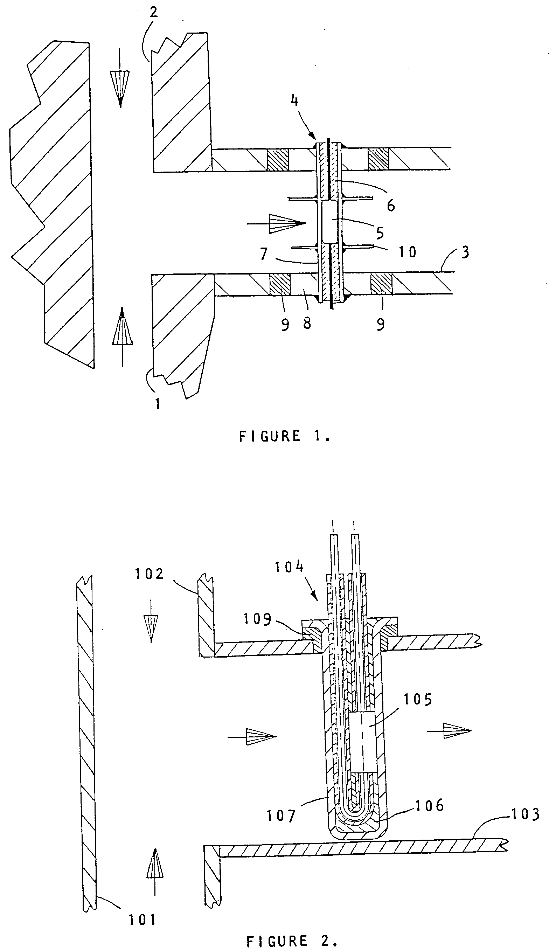

Referring first to Figure 1, there is shown a T-junction mixing chamber having opposed inlets 1 and 2 for hot and cold water supplies respectively and an outlet 3 at right angles thereto for mixed water. Mounted in the outlet 3 closely adjacent to the point of mixing of the hot and cold water supplies is a temperature sensor 4.

The sensor 4 includes a diode 5 embedded in a low thermal conductivity filler compound 6 contained in a high thermal conductivity metal tube 7 of uniform circular cross-section that straddles the outlet 3 transverse to the direction of fluid flow with the diode 5 centrally positioned in the outlet 3.

In this embodiment, the tube 7 is made of copper having a thermal conductivity of 380W/mK and the filler compound 6 is an epoxy resin having a thermal conductivity of the order of 1.2W/mK with the ratio of thermal conductivities being >300:1.

The tube 7 is brazed or otherwise sealed in watertight manner at each end to an outer copper ring 8 that is mounted in the outlet 3 with a thermal break 9 at each end.

In operation, the tube 7 and ring 8 act as an integrator in respect of the water temperature transversely of the flow path through the outlet 3 and the resin filler 6 acts as a heat sink to average out differences in the water temperature across the flow path due to incomplete mixing of the hot and cold supplies.

As a result, the diode 5 detects the average temperature which is related to the true water temperature and produces an output which may be used to control valve means (not shown) for adjusting the relative proportions of hot and cold water to maintain constant a selected outlet water temperature for delivery to a shower head, washbasin, bath or other ablutionary appliance.

As will be understood, by averaging out differences in the water temperature across the flow path, the output of the sensor 4 is not affected by incomplete mixing of the hot and cold supplies.

As a result, the sensor 4 can be positioned close to the actual point of mixing of the hot and cold supplies so that a fast response to temperature change is obtained. Additionally, mixing can be effected using an extremely simple mixing chamber such as the T-junction illustrated and complex mixing chambers such as used previously to ensure complete mixing of the hot and cold supplies can be avoided.

Increasing the surface area of the sensor 4 which can act as an integrator improves temperature measurement by reducing the steady state temperature shift but reduces speed of response to changing inlet conditions by increasing the time constant. For this reason, the ring 8 is of limited axial length, preferably less than the diameter, with the thermal break 9 at each end and the available surface area may be increased by attaching copper fins 10 or the like to the tube 7.

Referring now to Figure 2, a second embodiment is shown in which like reference numerals in the series 100 are used to indicate parts corresponding to Figure 1.

The sensor 104 has a diode 105 embedded in epoxy resin 106 contained in a copper tube 107 extending transversely across the outlet 103 to straddle the flow path with the diode 105 centrally positioned in the outlet 103. The thermal conductivities of the tube 107 and resin 106 are the same as in the first embodiment.

A thermal break 109 is provided between the outlet 103 and one end of the tube 107. The other end of the tube 107 is closed and lies closely adjacent to the wall of the outlet 103.

The operation of the sensor 104 is similar to that of the first embodiment and will be understood from the description already given. The surface area of the tube 107 may be increased if desired by any suitable means (not shown) such as the fins shown in Figure 1.

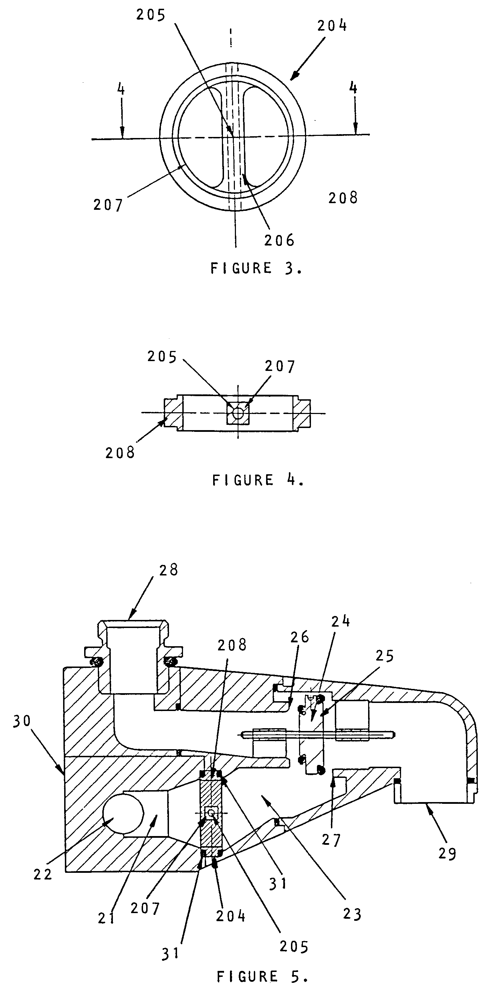

With reference now to Figures 3 and 4, a third embodiment is shown in which like reference numerals in the series 200 are used to indicate parts corresponding to Figure 1.

The sensor 204 has a diode 205 embedded in epoxy resin 206 contained in a brass tube 207 of uniform square cross-section extending transversely of an annular brass ring 208. The tube 207 may have a circular, oval, rectangular or other uniform cross-section.

The tube 207 and ring 208 are formed integrally by machining from solid brass having a thermal conductivity of 111W/mK with the ratio of the thermal conductivity to that of the resin 206 being approximately 100:1.

The tube 207 and ring 208 may be integrally formed in other ways, for example by casting, and the surface area of the tube 207 may be increased if desired by any suitable means (not shown) such as the fins shown in Figure 1.

A bath/shower mixer 20 incorporating the sensor 204 is shown in Figure 5. The mixer 20 has a T-section mixing chamber 21 with opposed inlets 22 (one only shown) and an outlet 23 leading to a diverter valve 24.

In known manner, the diverter valve 24 comprises a valve member 25 movable between opposed valve seatings 26,27 for directing the water flow either to an outlet 28 for connection to a shower (not shown) or to an outlet 29 for filling a bath (not shown). Any suitable means may be provided for moving the valve member 25 to select the desired outlet 28,29.

The sensor 204 is mounted in the outlet 23 upstream of the diverter valve 24 with the diode 205 positioned centrally in the outlet 23 to monitor the outlet water temperature.

The sensor 204 is sealed relative to the body 30 of the mixer 20 by O-rings 31 providing a thermal break at each end of the ring 208. In this way, the sensor 204 is not affected by heat transfer through the body 30.

In an alternative arrangement (not shown), the thermal break may be provided by making the body 30 or that part forming the outlet 23 in which the sensor 204 is mounted of plastics or other low thermal conductivity material.

The operation of the sensor 204 is similar to the first embodiment and the diode 205 produces an output that is used to control respective inlet valves (not shown) for adjusting the relative proportions of hot and cold water admitted to the mixing chamber 21 to maintain substantially constant a selected outlet temperature.

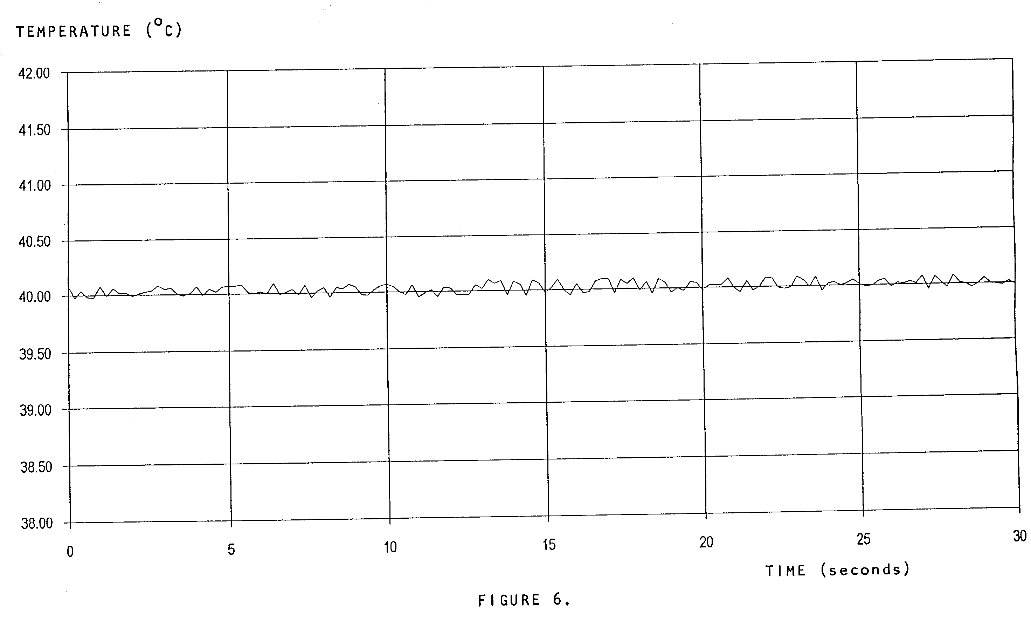

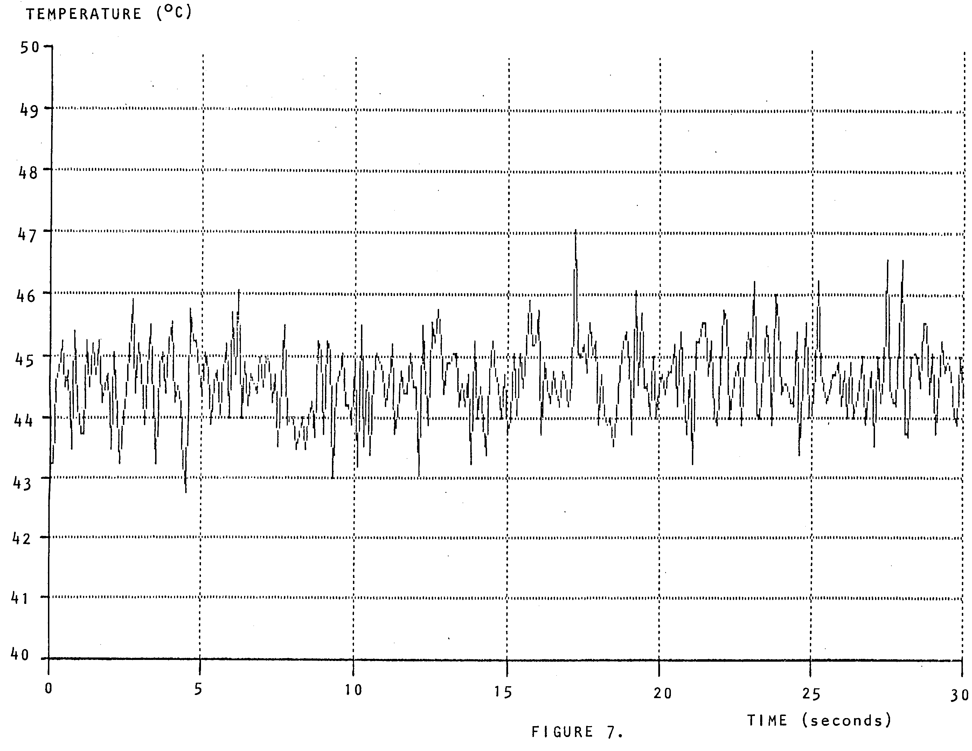

Figure 6 shows a trace of temperature for a 30 second time interval for the sensor 204 and Figure 7 shows a trace under the same conditions with the sensor 204 replaced by a thermocouple located in the mid-part of the flow passage.

As can be seen, the temperature stability of the sensor 204 (±0.05°C) is substantially better than that of the thermocouple (±1.5°C). The improved temperature stability of the sensor 204 enables close control of the outlet temperature under varying conditions of inlet pressures and/or flow rates as shown by the following results for hot and cold supplies having pressures of 300kPa (hot and cold) and temperatures of 61°C (hot) and 20°C (cold):-

| Flow rate adjustment | |
|---|---|
| flow (litres/minute) | outlet temperature (°C) |
| 47.2 | 37.9 |
| 16.3 | 38.0 |
| 47.3 | 37.9 |

| Hot pressure adjustment | |
|---|---|
| kPa | outlet temperature (°C) |
| 300 | 38.0 |
| 150 | 37.9 |
| 300 | 38.0 |

| Cold pressure adjustment | |
|---|---|
| kPa | outlet temperature (°C) |
| 300 | 37.9 |
| 150 | 37.6 |
| 300 | 37.9 |

It will be understood that the invention is not limited to the applications above-described and that the sensor may be used in other applications where monitoring the temperature of water or other fluid is required. For example, in instantaneous water heaters where the desired water temperature is controlled by adjusting the ratio of flow rate of cold water to heat energy input to maintain constant a selected water temperature for delivery to a shower head, washbasin, bath or other ablutionary appliance.

## Claims

1. A temperature sensor for fluids characterised by a temperature responsive element (5,105,205) embedded in a filler compound (6,106,206) contained in a housing (7,107,207) having a higher thermal conductivity than the filler compound (6,106,206) and adapted, in use, to straddle the flow path of a fluid the temperature of which is to be monitored.

2. A sensor according to Claim 1 characterised in that a thermal break (9,109,31) is provided between the housing (7,107,207) and a fluid passage (3,103,23) defining the flow path.

3. A sensor according to Claim 2 characterised in that the housing (7,207) extends transversely of an outer ring member (8,208) adapted for mounting in the fluid passage (3,23) with a respective thermal break (9,31) at each end.

4. A sensor according to any one of the preceding Claims characterised in that the element (5,105,205) is positioned centrally of the flow path and is preferably adapted to provide an electrical output representative of water temperature, for example the element (5,105,205) may comprise a diode, thermocouple or the like whose resistance changes with temperature.

5. A sensor according to any one of the preceding Claims characterised in that the housing (7,107,207) is made of metal or alloy such as brass or copper and the filler compound (6,106,206) is an epoxy resin optionally including an additive such as particles of metal, metal oxide or the like for modifying the thermal conductivity of the filler compound (6,106,206).

6. A sensor according to any one of the preceding Claims characterised in that the ratio of the thermal conductivities of the housing (7,107,207) and filler compound (6,106,206) is approximately 100:1 or greater.

7. A sensor according to any one of the preceding Claims characterised in that the housing (7) has means (10) for increasing the surface area exposed to the fluid.

8. A temperature sensor for fluids characterised by a temperature responsive element (5,105,205) embedded in a low thermal conductivity filler (6,106,206) contained in a high thermal conductivity body (7,107,207) adapted for mounting in a fluid passage (3,103,203) to extend transverse to the direction of fluid flow substantially between opposed sides of the fluid passage (3,103,203) whereby variations in the fluid temperature transverse to the direction of flow are averaged out by the differential thermal conductivities of the filler (6,106,206) and body (7,107,207).

9. Apparatus for mixing hot and cold water comprising a temperature sensor according to any one of the preceding Claims arranged to monitor the water temperature and control valve means to vary the relative proportions of hot and cold water to maintain constant a selected water temperature.

10. An instantaneous water heater comprising a temperature sensor according to any one of Claims 1 to 8 arranged to monitor the water temperature and control the ratio of the flow rate and power input to maintain constant a selected water temperature.
